# EUROPEAN PATENT SPECIFICATION

(11) **EP 3 390 885 B1**
(45) Date of publication and mention of the grant of the patent: **21.07.2021**
(21) Application number: 16876684.8
(22) Date of filing: 15.12.2016
(51) Int. Cl.: F16M 11/10

(54) **ROTATING WALL MOUNT FOR DISPLAY DEVICE**
DREHWANDHALTERUNG FÜR ANZEIGEVORRICHTUNG
SUPPORT MURAL TOURNANT POUR DISPOSITIF D'AFFICHAGE

(30) Priority: 15.12.2015 US 201514970097
(43) Date of publication of application: 24.10.2018
(73) Proprietor: Videri, Inc., New York, NY 10013 (US); Trachtenberg, Marc, New York, NY 10024 (US); Gariepy, Francois, Westmount, QC H3Y 2W3 (CA)
(72) Inventor: TRACHTENBERG, Marc, Westmount, QC H3Y 2W3 (US); GARIEPY, Francois, Westmount, QC H3Y 2W3 (CA)
(74) Representative: Cookson, Barbara Elizabeth
(86) International application number: PCT/US2016/066934
(87) International publication number: WO 2017/106502

(56) References cited:
- WO-A1-2005/019720
- US-A- 5 941 493
- US-A1- 2001 048 584
- US-A1- 2010 013 742
- US-A1- 2010 219 303
- US-A1- 2014 339 385
- US-A1- 2015 068 799
- US-A1- 2015 070 340
- US-A1- 2015 070 594
- US-A1- 2016 166 061
- US-B1- 7 748 670

## Description

### Field of the Invention

The present invention relates generally to a system and method for pivotally mounting an electronic device on a wall. The invention provides a wall mount and a back cover coupled to the device that enables the device to easily rotate about its position on the wall.

### Background

In recent decades, many individuals have come to rely on electronic devices as their primary source of entertainment. This popularity has transformed these devices into thinner and lighter electronics that can be easily mounted or held in a user's hands. These new devices have also been designed to change orientation intuitively to allow for full rotation of the device. To create a more comfortable user experience, a large number of individuals prefer to mount these lighter devices on a wall. Many wall mounts have been designed for this purpose, but few allow for full rotation. The wall mounts that can provide full rotation are heavy, bulky, and unsightly. They can damage the wall they are mounted on and can be difficult to use. It is therefore advantageous to provide a light, easy to use, and unobtrusive wall mount that allows a device to fully rotate. For example. US 5941493 Yung-Long Cheng (24 Aug 1999) ADI Corporation discloses a system for pivotally mounting an electronic device to a desk stand. US 2015/007 0340 A1 (12 Mar 2015) Trachtenberg describes a wall mount for a display assembly to allow a change from horizontal to vertical orientation. The Trachtenberg system for pivotally mounting an electronic device to a wall comprises a power connector disc having a pair of contact pads and a wall mount bracket or wall plate configured to mount to the wall having a central opening to receive the power connector disc. The Trachtenberg wall plate is rotatably coupled to a recessed mounting structure on the back of the display assembly. The present invention addresses the problems of providing a coupling of the wall plate to the device to permit such rotation with minimal thickness without requiring a recess in the device. The present invention is defined in the claims. There is now described herein with reference to the accompanying drawings

a wall mount for electronic devices that allows for full rotation of the device and measures roughly 8 millimeters thick. Due to the size of the invention, it is essentially invisible behind the electronic device. It is also easy to rotate and causes minimal, if any, damage to the wall it is mounted on.

### Brief Description of the Drawings

FIG 1 depicts an oblique overall view of the wall mount of the present invention;

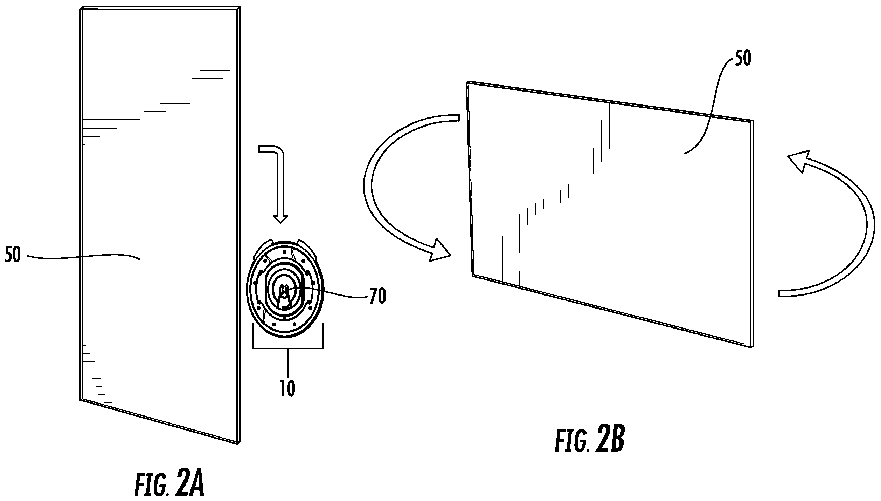

FIG 2A illustrates rotation of the electronic device using the wall mount;
FIG 2B illustrates rotation of the electronic device using the wall mount;

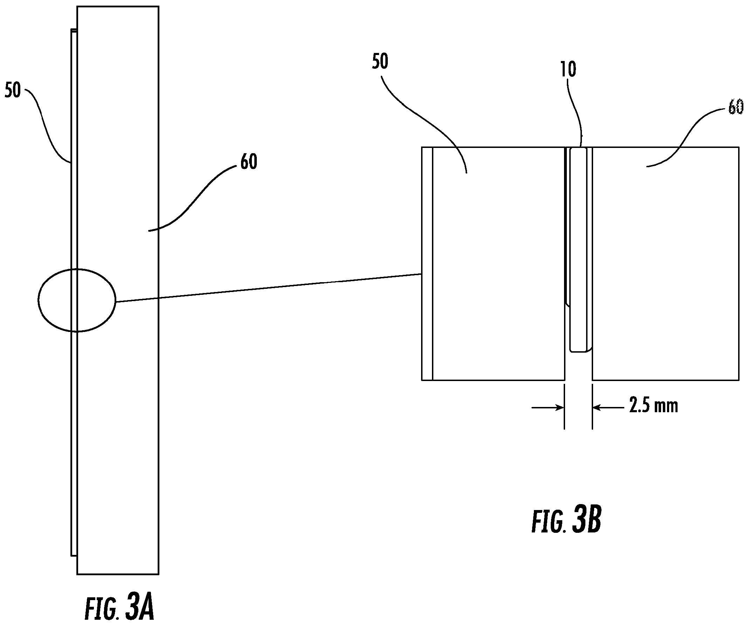

FIG 3A is a view of the wall mount mounted on a wall;
FIG 3B is a magnified side view of the electronic device mounted to a wall showing the wall mount between the wall and the electronic device;
FIG 4A is a front view of the wall mount;
FIG 4B is a side view of the wall mount;
FIG 5 is an exploded view of the wall mount with the power connector disc;
FIG 6A is an oblique front view of the wall plate;
FIG 6B is an oblique back view of the wall plate;
FIG 7A is an oblique front view of the rotator ring;
FIG 7B is an oblique back view of the rotator ring;

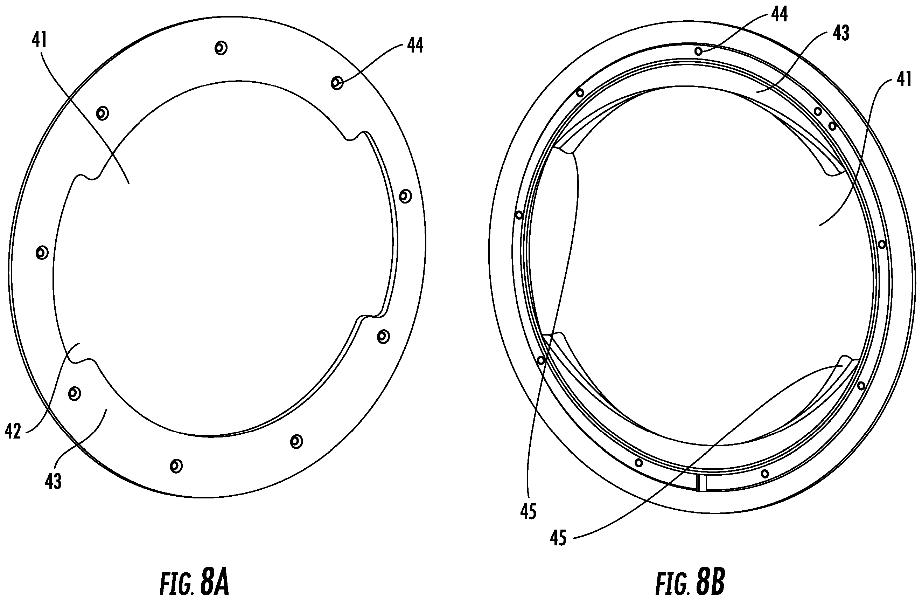

FIG 8A is an oblique front view of the face plate;
FIG 8B is an oblique back view of the face plate;
FIG 9A is an oblique new view of the rotator ring engaged with the wall plate in a first assembly step;
FIG 9B is a front view of the face plate, rotator ring, and wall plate in a second assembly step;
FIG 9C is a front view of the face plate, rotator ring, wall plate, and power connector disc in a third assembly step;
FIG 10A is a front view of the wall mount indicating the area of detail illustrated in FIG 10B;
FIG 10B is a cross-sectional view of the top half of the wall mount and power connector disc;
FIG 10C is a cross sectional view of the wall mount indicating the area of detail illustrated in
FIG 10D is a detailed view of the bottom half of the wall mount showing the interactions between the face plate, rotator ring, and wall plate;

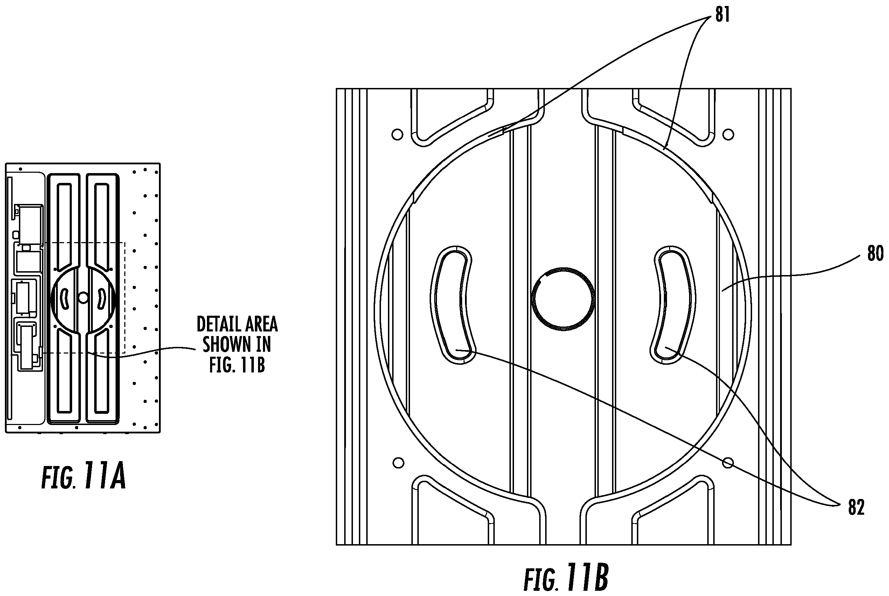

FIG 11A is a front view of the back cover of an electronic device;
FIG 11B is a detailed view of the back cover of an electronic device;

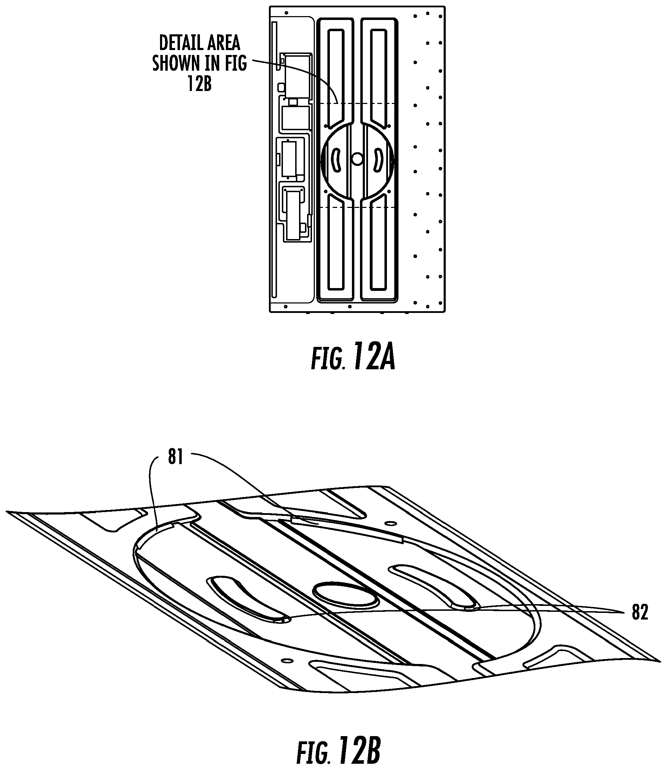

FIG 12A is an oblique view of the back cover of an electronic device;
FIB 12B is a detailed oblique view of the back cover of an electronic device;

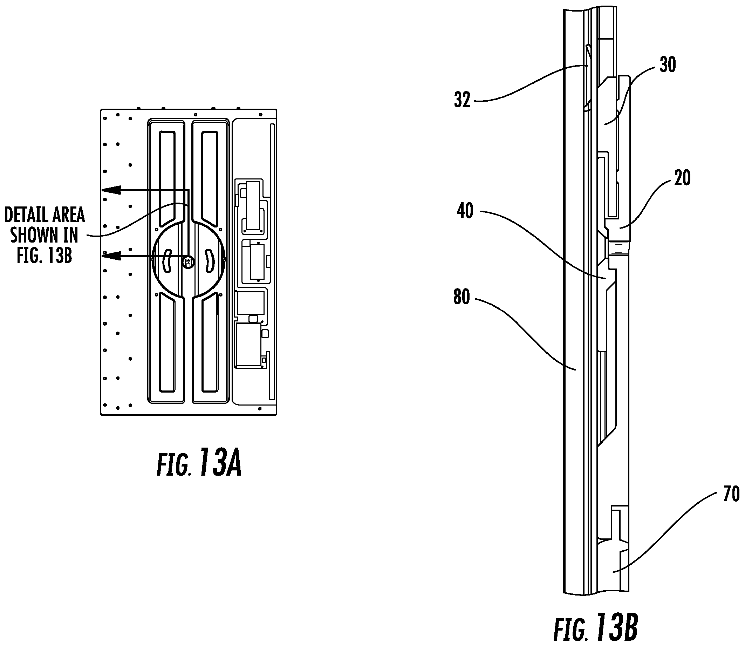

FIG 13A is a front view of the back cover in the vertical position indicating the area of detail illustrated in Fig. 13b;
FIG 13B is a cross-sectional detail view of the wall mount engaged with the back plate in the vertical position;

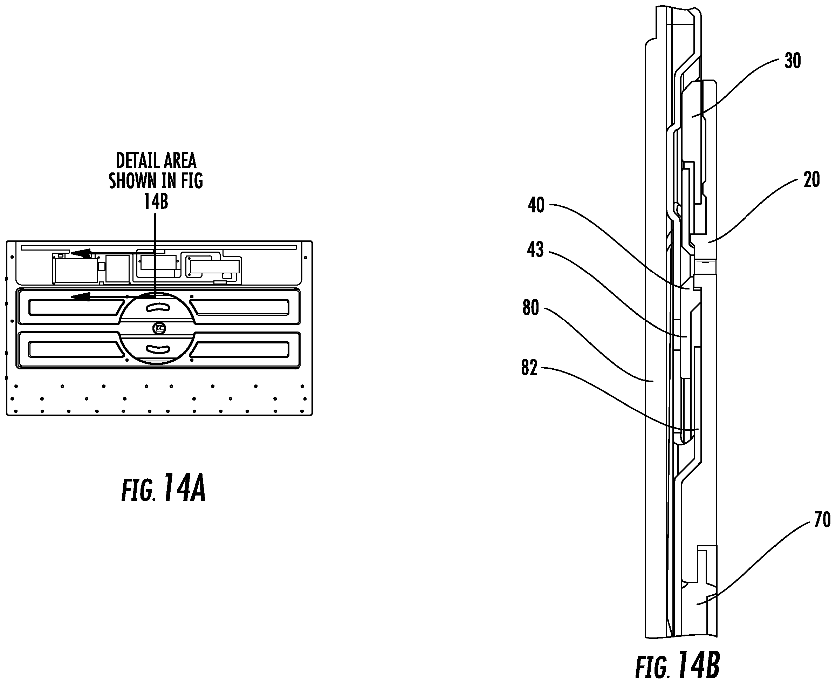

FIG 14A is a front view of the back cover in the horizontal position indicating the area of detail illustrated in Fig.14b;
FIG 14B is a cross-sectional detail view of the wall mount engaged with the back plate in the horizontal position;
FIG 15 illustrates a front view of the installation of the back plate on the wall mount. The display device is not shown and the back plate is transparent;
FIG 16 shows a front view of the wall mount in the back plate. The display device is not shown and the back plate is transparent;

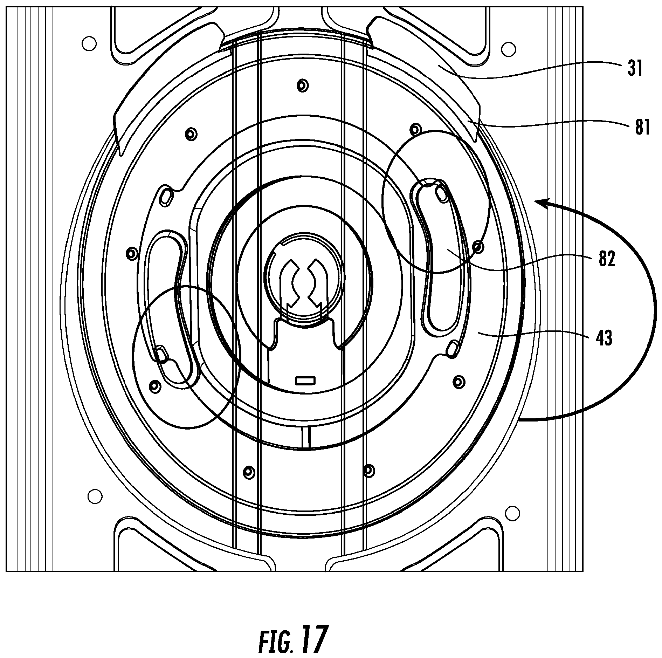

FIG 17 illustrates the rotation of the back plate and rotator plate in the wall mount from a front view. The display device is not shown and the back plate is transparent;

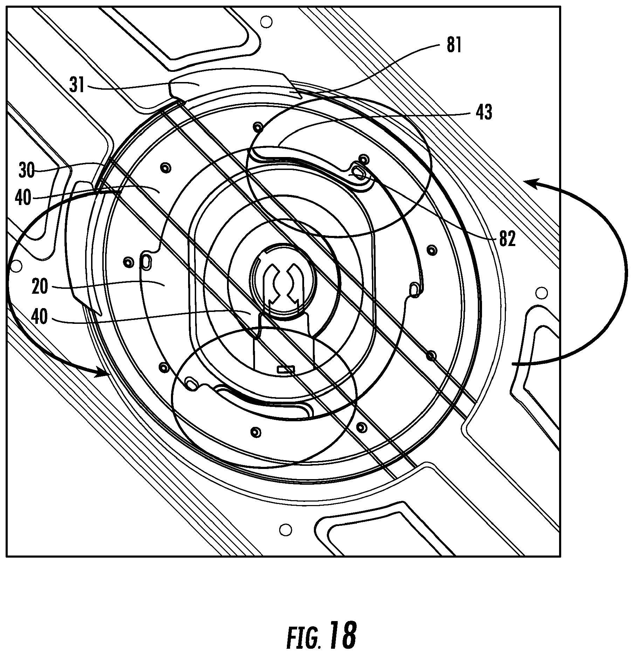

FIG 18 illustrates further rotation of the back plate and rotator plate in the wall mount. The display device is not shown and the back plate is transparent;

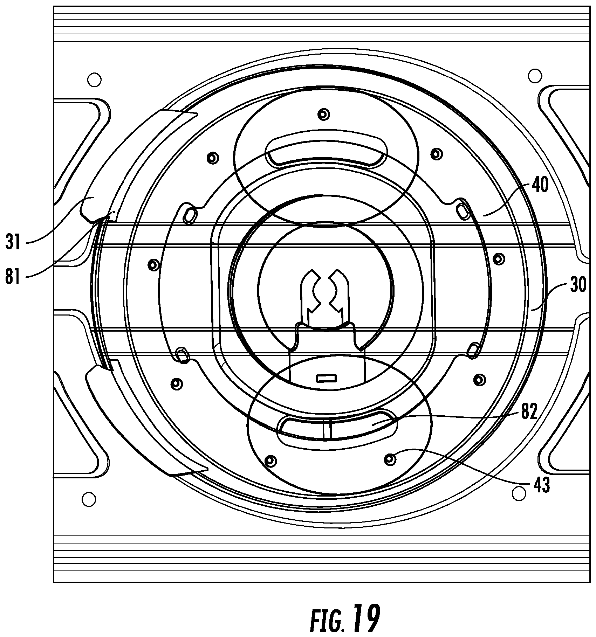

FIG 19 illustrates further rotation of the back plate and rotator plate in the wall mount. The display device is not shown and the back plate is transparent;
FIG 20 shows a back view of the wall mount in the back plate. The wall plate and the power disc are not shown;
FIG 21 shows the wall mount in position in the back plate. The wall plate is not shown;
FIG 22 illustrates the rotation of the back plate and rotator plate in the wall mount from a back view. The wall plate is not shown;
FIG 23 illustrates further rotation of the back plate and rotator plate in the wall mount from a back view. The wall plate is not shown;
FIG 24 illustrates further rotation of the back plate and rotator plate in the wall mount from a back view. The wall plate is not shown;

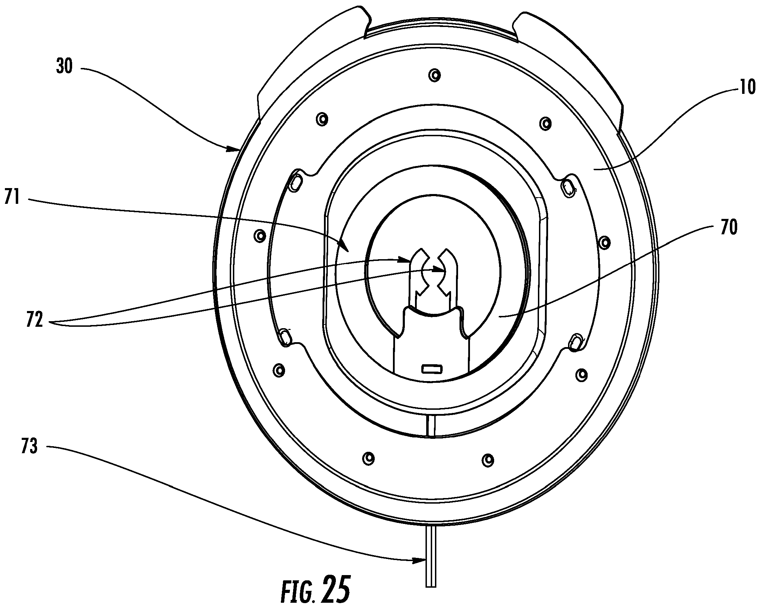

FIG 25 is a front view of the power disc inside the wall mount;

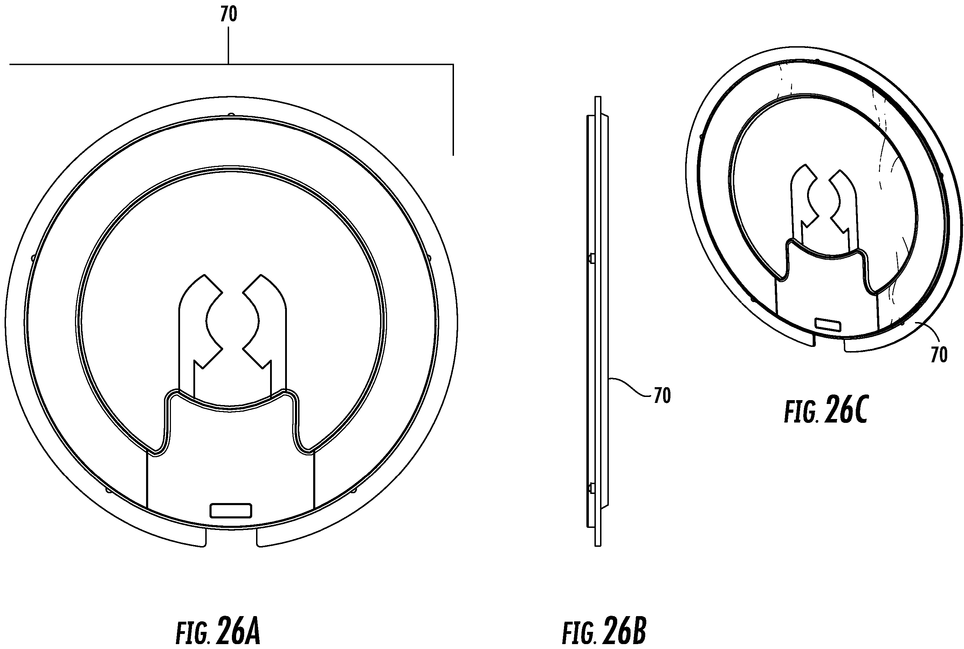

FIG 26A is a front view of the power disc;
FIG 26B is a side view of the power disc;
FIG 26C is a front oblique view of the power disc;
FIG 27 is an exploded view of the power disc;
FIG 28A is an illustration of separating electrical cables to be used in the power disc;
FIG 28B is a detailed view of the wire and cable to be used in the power disc;
FIG 29A is a front view of the wire of the power disc in the strain relief;
FIG 29B is a detailed view of the contact pads on the wire;
FIG 29C is an illustration of connecting the contact pads to the wires on the strain relief;
FIG 30A shows the contact pads before they are constructed;
FIG 30B is an illustration of the construction of the contact pads;
FIG 31 is a front view of the power disc without the cover to show the placement of the strain relief, wires, and contact pads;
FIG 32A is an illustration of securing the wires to the main disc;
FIG 32B is an illustration of where to applying the securing glue to the wires;
FIG 33A is an illustration of the cover being positioned on the power disc from a front perspective;
FIG 33B is an illustration of the cover being positioned on the power disc from a back perspective;
FIG 34A is a side cross sectional view indicating the area of detail illustrated in FIG 34B;
FIG 34B is a detailed cross sectional view of the power connector disc in the wall mount;
FIG 35A is an oblique overall all view of the wall mount indicating the positioning of the cross sectional view illustrated in FIG 35B; and
FIG 35B is a full cross sectional view of the wall mount and power connector disc.

### Detailed Description

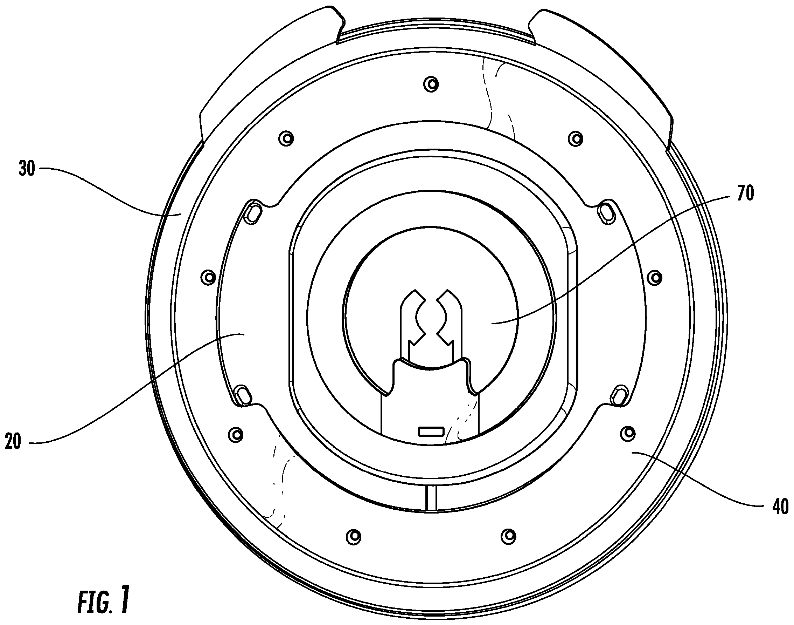

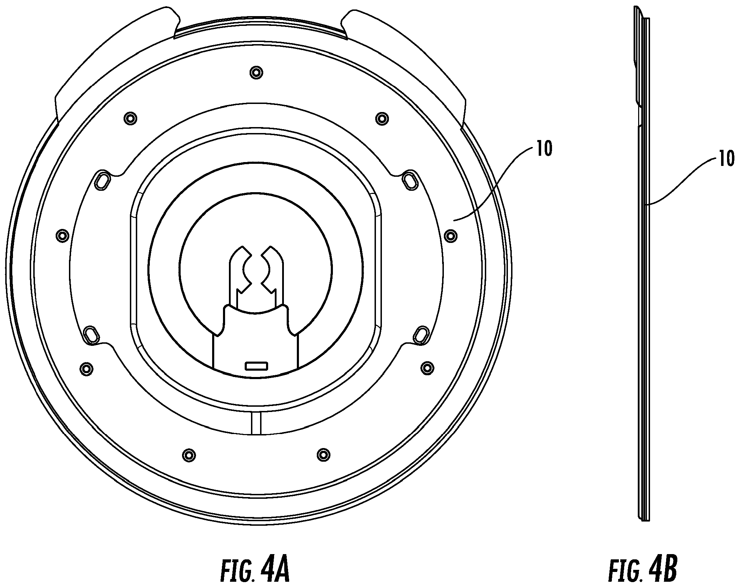

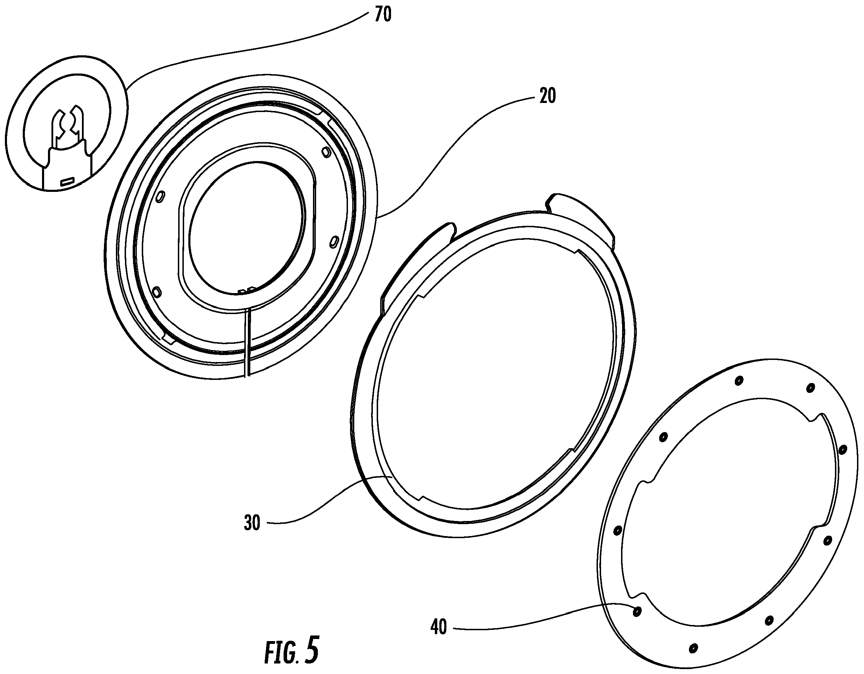

Embodiments of the wall mount 10 of the present invention preferably allow a display device 50 to be securely mounted on a wall in such a way that a user can easily rotate the device between vertical and horizontal orientations without losing continuous power to the device. The wall mount is secured to the wall on one end and interlocked into the display device on the other. The wall mount 10 is preferably 7.8 millimeters thick at its thickest point and 5.7 millimeters at its thinnest point with a 288 millimeter diameter. These measurements of the preferred embodiment with a thicker upper section and a narrower lower section are shown in FIG 4. When coupled to the display device and mounted on a wall, the wall mount holds the device roughly 2.5 millimeters from the wall. The wall mount consists of four main components, a wall plate, a face plate, a rotator ring, and a power disc, as seen in FIGS 1 and 5. The pieces of the wall mount are preferably Teflon coated to decrease friction, and can be made of various materials, although steel is preferred.

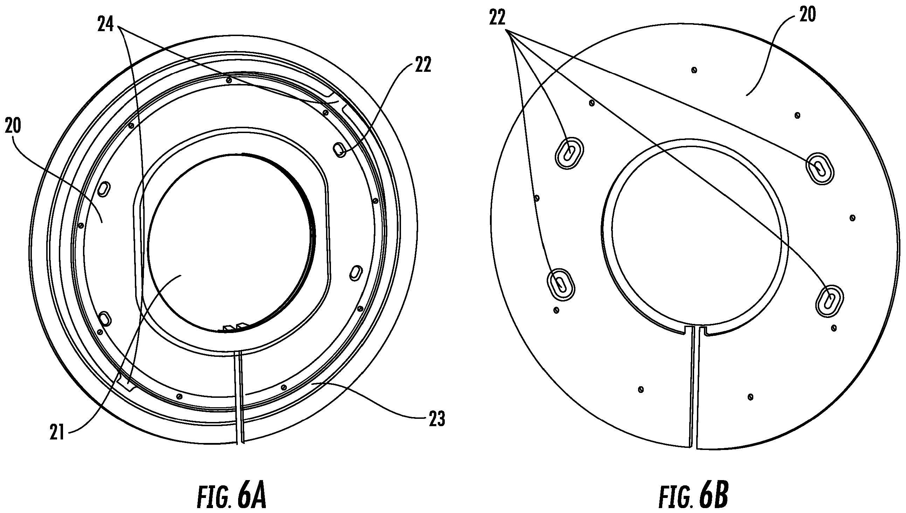

The wall plate 20, shown in FIG 6, is closest to the wall and is a circular piece fastened into the wall's surface by screws or another fastening mechanism. In its center is a circular orifice 21 surrounded by a recessed circular edge in which the power disc 70 engages such that the wall plate, and the other wall mount 10 components, encircle the power disc 70. The outer wall plate has slots 22 for screws or other tools such as double sided adhesive tape to mount and secure the wall mount to the wall, as well as recessed and projecting rings 23 at varying distances from the center for interacting with the other components of the wall mount. At least one of the indented rings will interact with the rotator ring 30 and has two stops 24 radially opposite each other to limit the range of rotation of the invention.

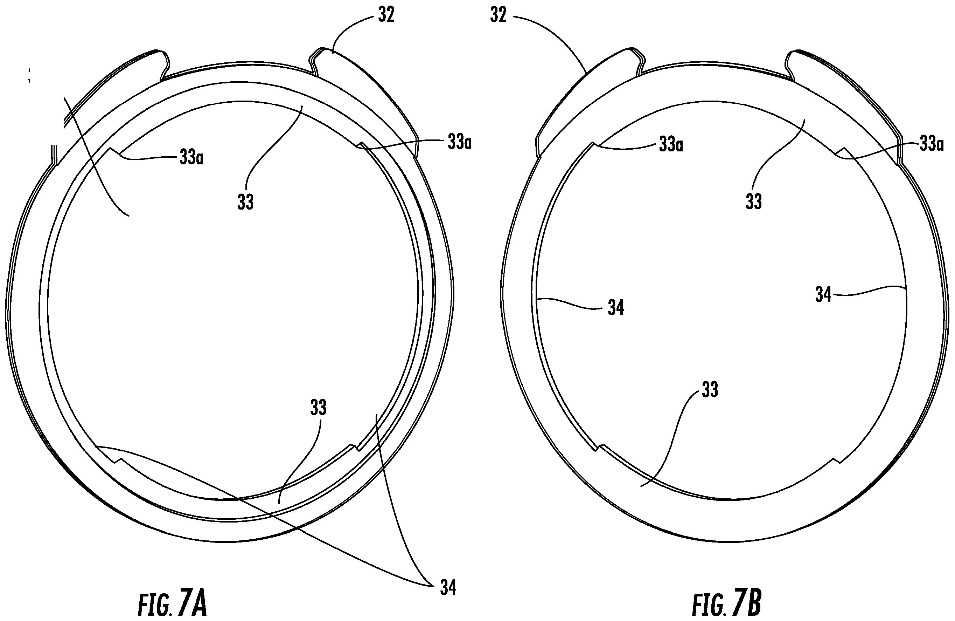

The rotator ring 30, shown in FIG 7, is formed to be positioned over the outermost portions of the wall plate 20. It is similarly a circular shape with a center circular orifice. Preferably, the top of the rotator plate's outside edge has protruding mounting horns that interlock with the back cover 80 of the display device 50 and hold the display device 50 in place when mounted on a wall 60. The rotator ring also has extended segments 33 on its interior edge which interact with the stops on the wall plate to determine the range of rotation.

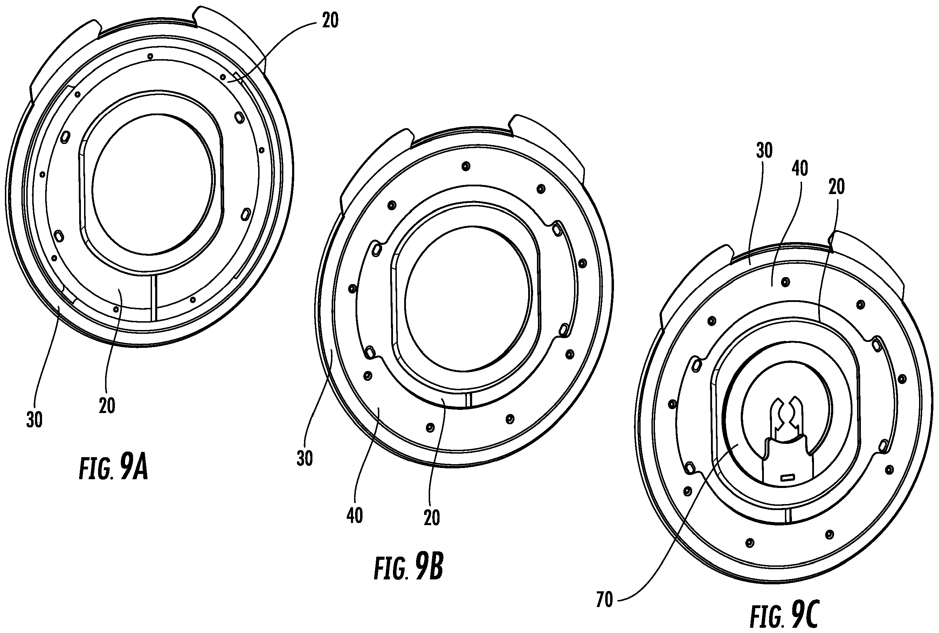

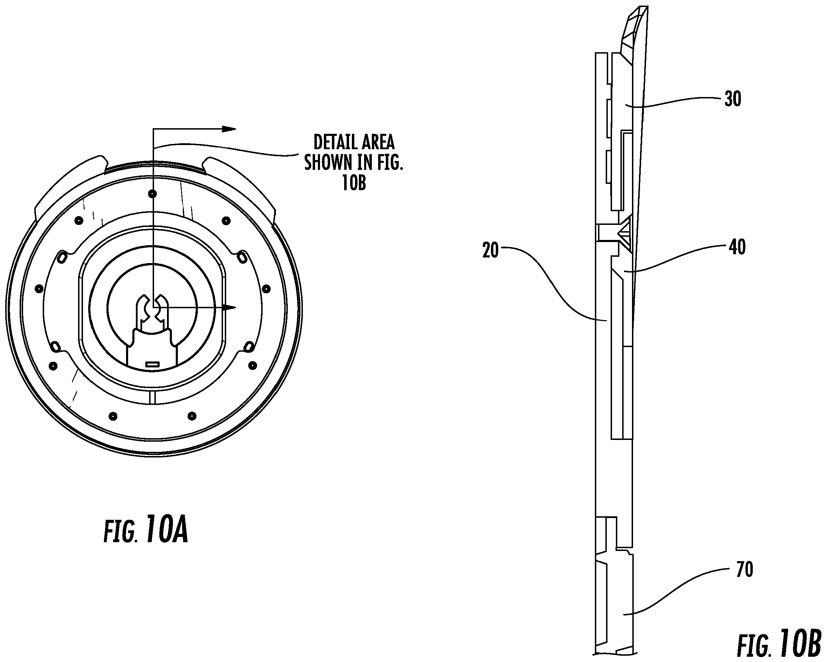

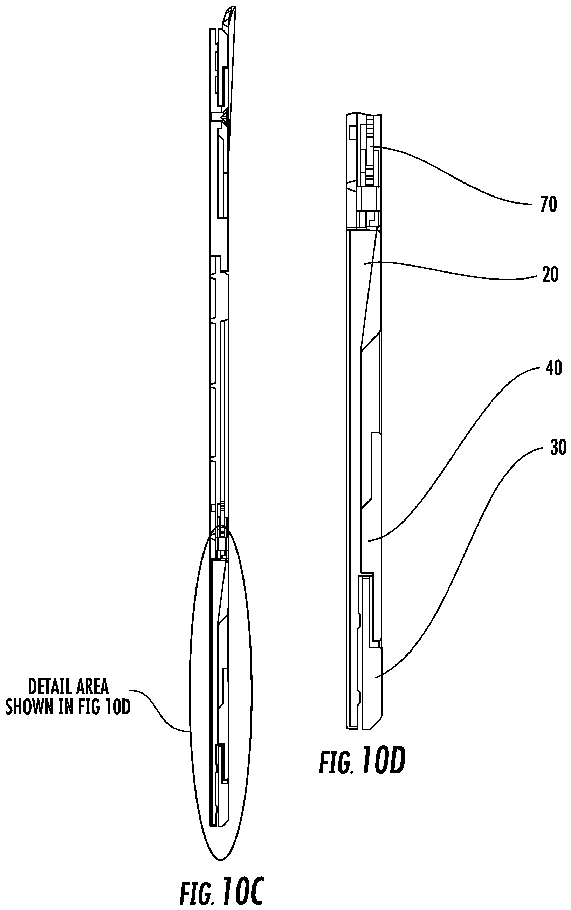

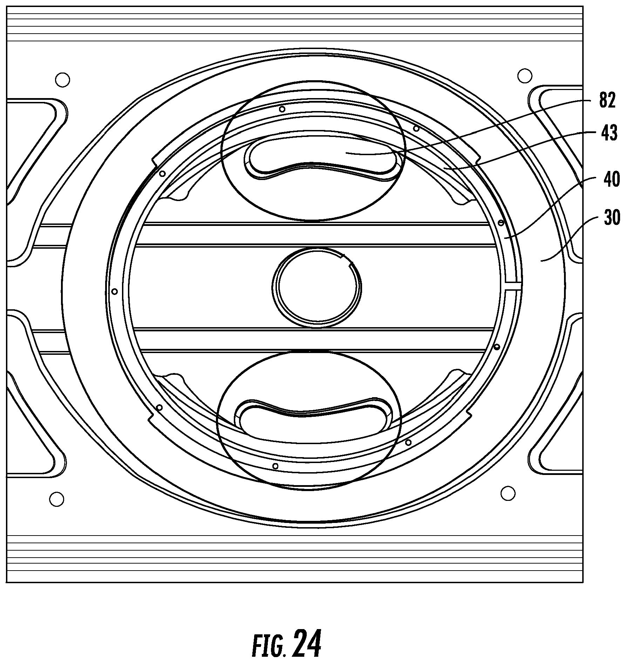

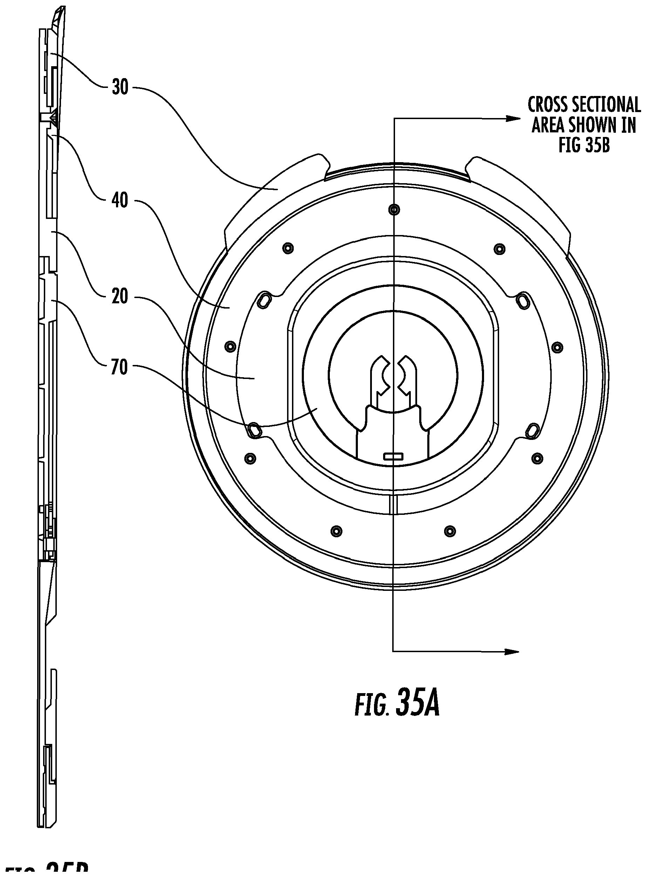

Then the face plate 40 fits over the inner portion of the rotator ring 30 and engages with the wall plate 20 at a radial location approximately between the center wall plate's center and edge. It is also a circular shape with a center orifice 41. The inner edge of the face plate is shaped to have large diameter arcs 42 forming slots that, when assembled, avoid covering the mounting slots 22 on the wall plate, as seen in FIG 9. The inner edge of the face plate is also shaped to have smaller diameter arcs 43 with knife edges 45. These smaller diameter arcs form tabs which will fit behind the back cover 80 of the device to secure the device when it is oriented horizontally, as in FIG 24. The outer circle of the face plate also has slots 44 which match up with at least some of the mounting slots 22 on the wall plate 20 for joining the two components by screw or other device and effectively enclosing rotator ring 30 between the components. In preferred embodiments, the screw or other mechanism in slots 22 and 44 extend to the wall 60 and hold wall mount 10 in place on a wall or other surface. This embodiment is illustrated in FIGS 10A, 10B, 34A, 34B, 35A, and 35B.

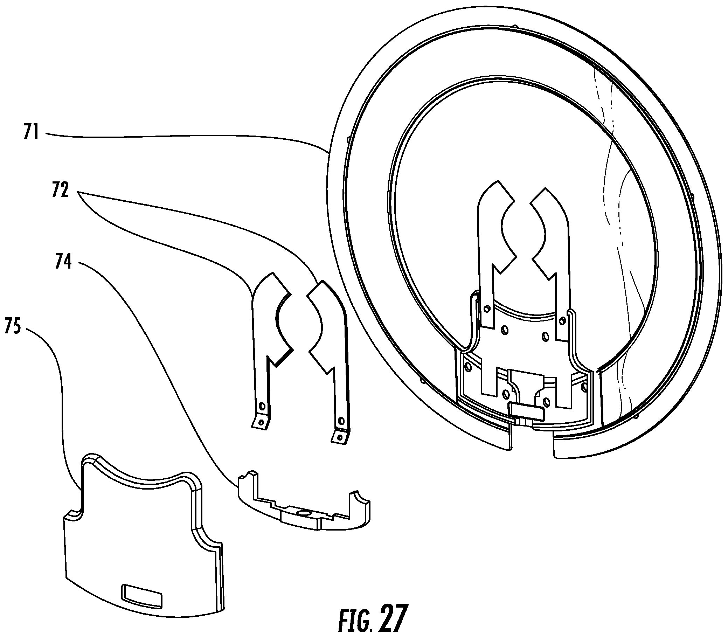

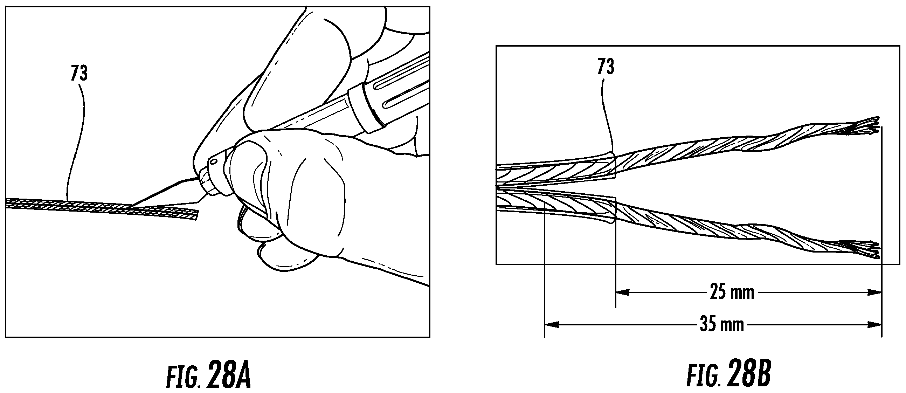

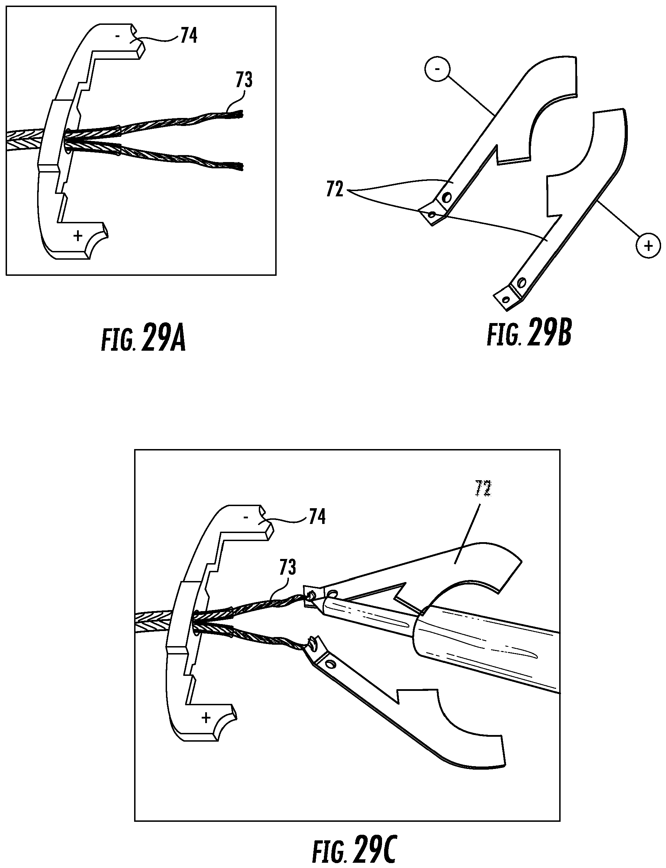

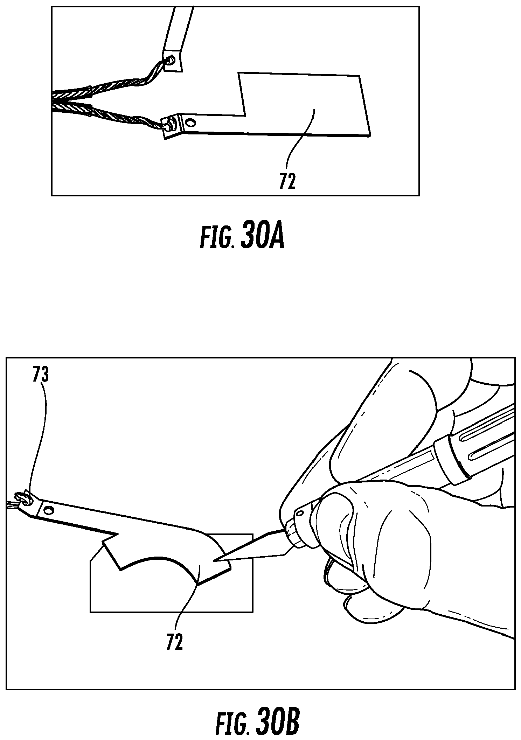

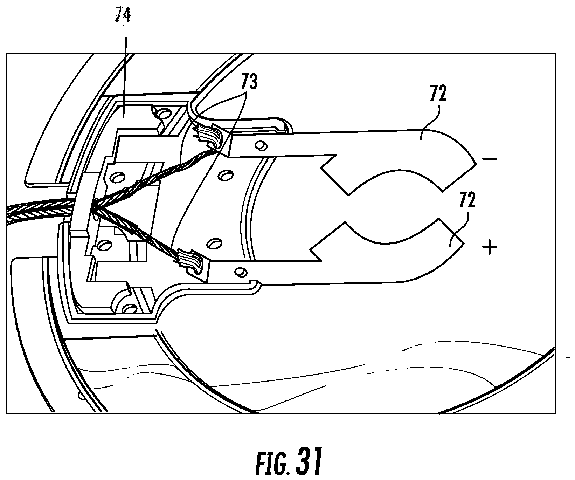

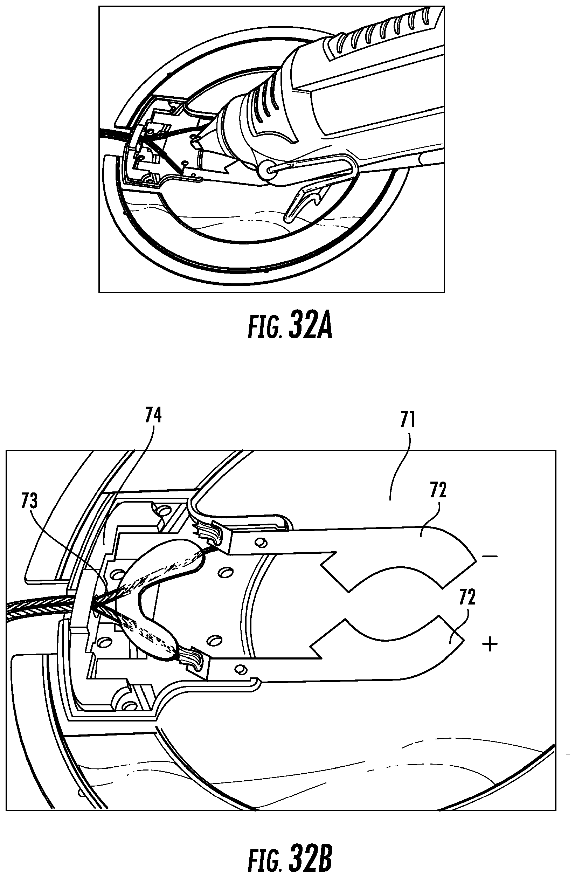

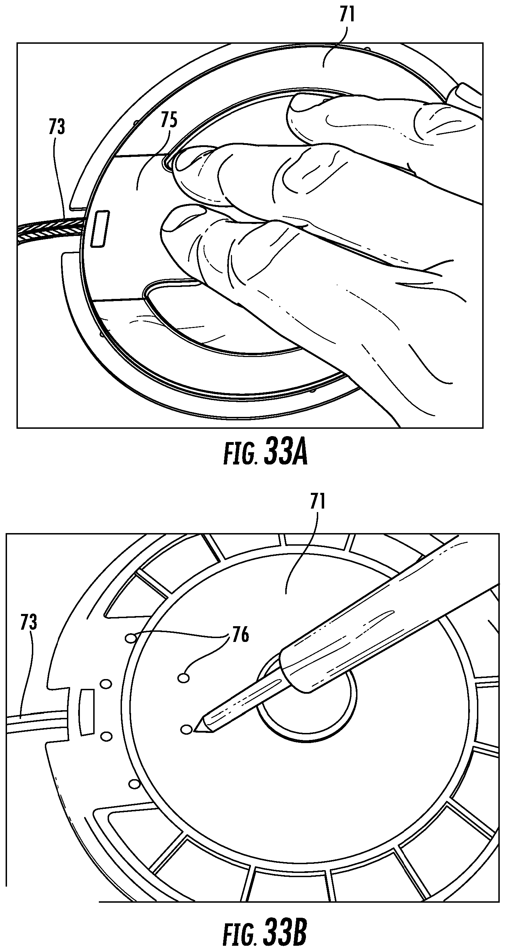

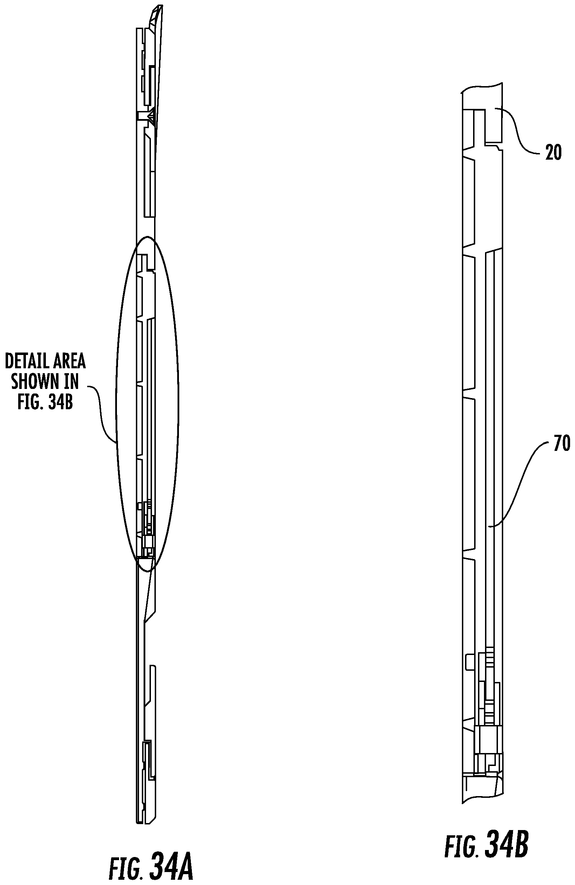

The power disc 70 sits in the center of the wall mount 10 as seen in FIGS 1, 34A, 35A, and 35B and provides electricity to the display device. A detailed view of the power disc inside of the wall plate in one embodiment of the invention is shown in FIG34B. The power disc is made up of five components: a main disc 71, two contact pads 72, wires 73, a strain relief 74, and a cover 75. The main disc 71 is circular in shape with raised arcs that create a recessed compartment in the center of the main disc, as seen in FIG 27. These arcs enclose and protect the electrical contact pads 72 which supply power to the device 50 and are preferably in the center of the main disc 71. The main disc includes further protrusions that encircle the wires and strain relief and provide a foundation on which the cover piece 75 rests, creating a protected compartment where the wires 73 connect to the contact pads 72. It also preferably includes a second recess for the insulated wires. In some embodiments the main disc further includes orifices for connecting the cover piece 75 via corresponding stakes on the cover piece 76. The contact pads 72 are two metal plates, one positively charged and one negatively charged, that lay in recess on the face of the main disc as in FIG 31 and are preferably secured thereto with an adhesive. They are shaped to carry electricity to the center of the main disc 71, preferably with arcs having a radius centered concentrically with the other components when assembled, which will accommodate for rotation of the display device's contact points as the device's orientation changes. The contact pads 72 may be made of any material that conducts electricity, although those that do so most efficiently and inexpensively, such as copper or aluminum, are preferred. They may be made from a sheet of metal having two holes positioned vertically near a lower edge as seen in FIG 30A. The upper holes will provide a structure to anchor the contact pads to the main disc 71 while the lower holes will provide a connection point for the wires 73. FIG 30B illustrates a sheet of metal that may then be cut to the preferred shape. Double sided tape is preferably secured to the back of the contact pads by peeling the backing of the tape. Wires 73 attached to the bottom of the contact pads preferably connect the pads to an electrical power source. The power source is in the form of electrical wire that is connected to the power disk by a connector (not shown) allowing for easy replacement of the electrical source. The wires 73 can be made of any conductive material. As seen in FIG 28A the preferred embodiment uses standard two-wire cable. In the preferred embodiment, the wires of the two-wire cable are separated at the last 35 millimeters from the end using an Exacto-type knife. The wires are then stripped of insulation at the end 25 millimeters as seen in FIG 28B. The wires 73 should be insulated where possible, as in FIG 29A. Next, the strain relief 74 should be slipped over the end of the wires just past the point where the cable has been split. The preferred embodiment includes positive and negative markings on the strain relief which should align with the corresponding wires 73 as in FIG 29A. Once the positive and negative contact pads 72 are identified as in FIG 29B, the wires 73 may be passed through the lower holes in the ends of the contact pads and soldered into place. The lowest hole should be connected to wires 73 while the upper hole should be kept clear. The contact pads 72 should be secured flat on the face of the main disc via the strain relief. The contact pads are then placed on the main disc with the cable and strain relief as shown in FIG 31. The insulated wires 73 should not pass beyond the recess of the main disc. The exposed wires must not contact each other. Once the assembly is well aligned, the wires 72 should be secured with a glue gun and a generous amount of hot glue as in FIG 32A. The placement of the glue is highlighted in FIG 32B. The glue will provide strain relief and keep the exposed wires separated and insulated from each other. Finally, a cover 75 with a series of stakes engages with the protrusions of the main disc 71 and encases the contact pads 72, wires 73, and strain relief 74 between the cover and the main disc 71. The cover is preferably positioned before the hot glue hardens and secured in place preferably by melting stakes protruding from the cover 76 into the holes of the main disc 71 as illustrated in FIG 33B.

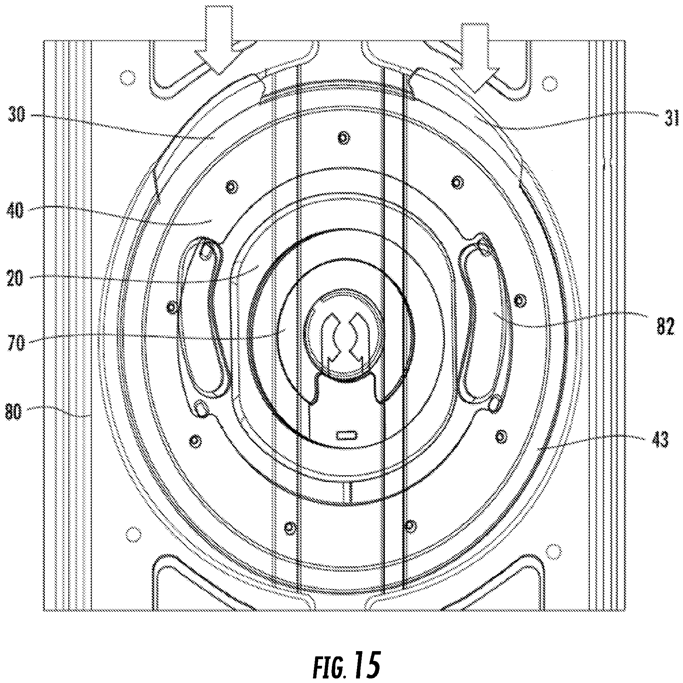

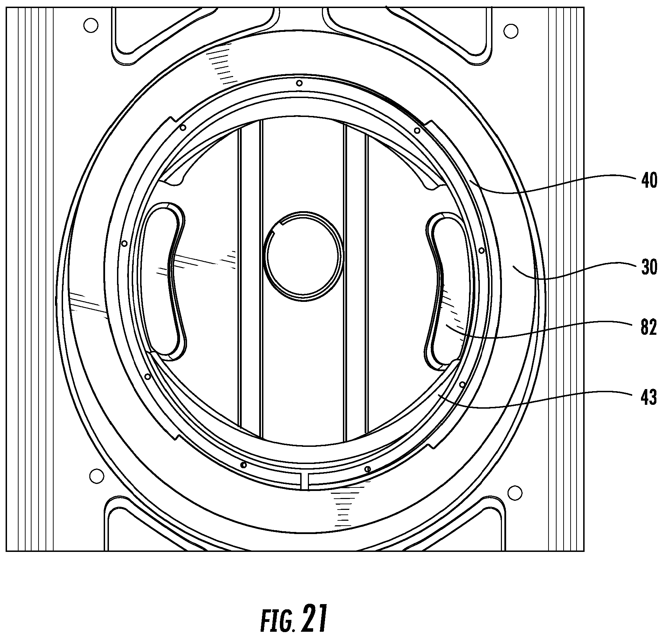

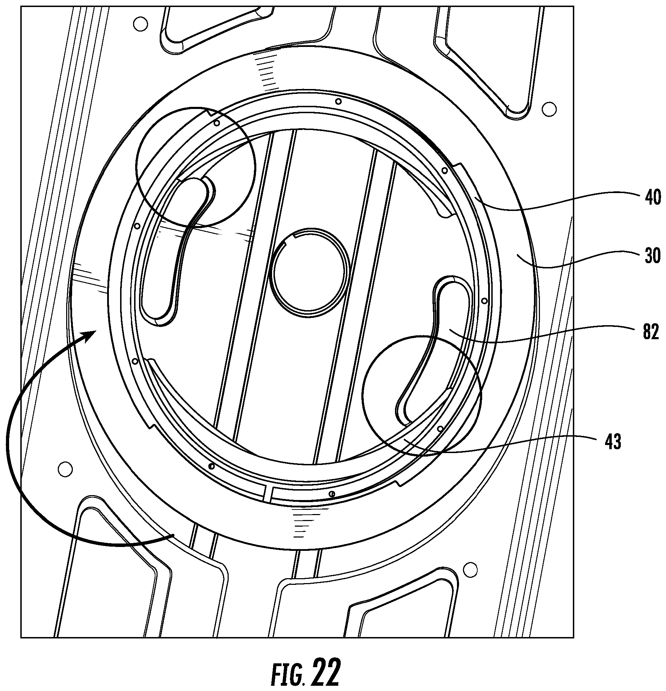

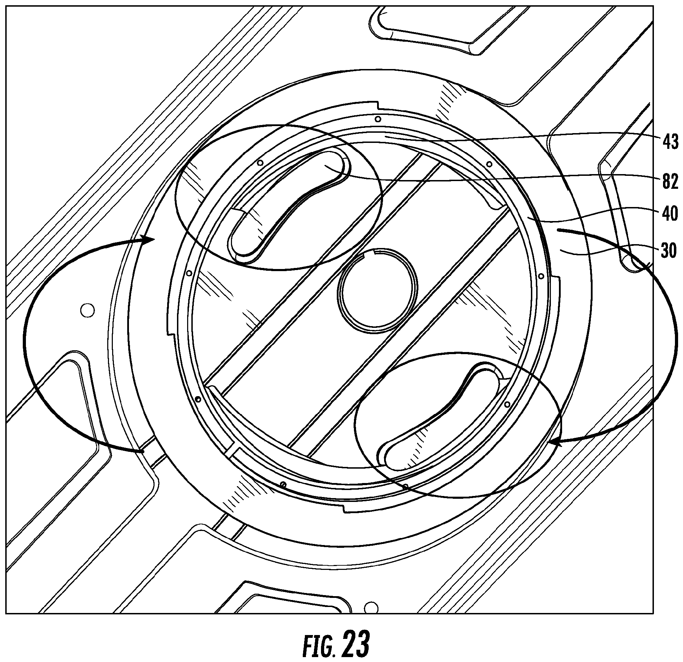

Preferably, the display device 50 includes a back cover 80 which connects the device to the wall mount 10. The back cover 80 is generally a steel plate with recesses, orifices, and protrusions which integrate the wall mount into its center. Specifically, the back cover 80 has slots 81 that interlock with the mounting horns 31 of the rotator ring 30. These slots 81 are positioned in a way that the mounting horns 31 are at the top most points of the wall mount 10 when the display device 50 is in the vertical position. The back cover 80 also has two raised flaps 82 that are positioned to interlock with the smaller diameter arcs 43 of the face plate. The knife edges 45 of arcs 43 will slide under the flaps 82.They are positioned so that one flap 82 is above the point of rotation and one flap 82 is below the point of rotation when the device is in the horizontal orientation to support the device in both directions. This design is illustrated in FIG 15. Preferably, the slots and flaps are punched and stamped into sheet metal that forms the back cover 80. As the device 50 and back cover 80 rotate, the flaps 82 will be moved to the sides of the point of rotation and thus will not interlock with the face plate when the device is in the vertical orientation. This movement is shown in FIGS 21-24 in which the wall plate is invisible.

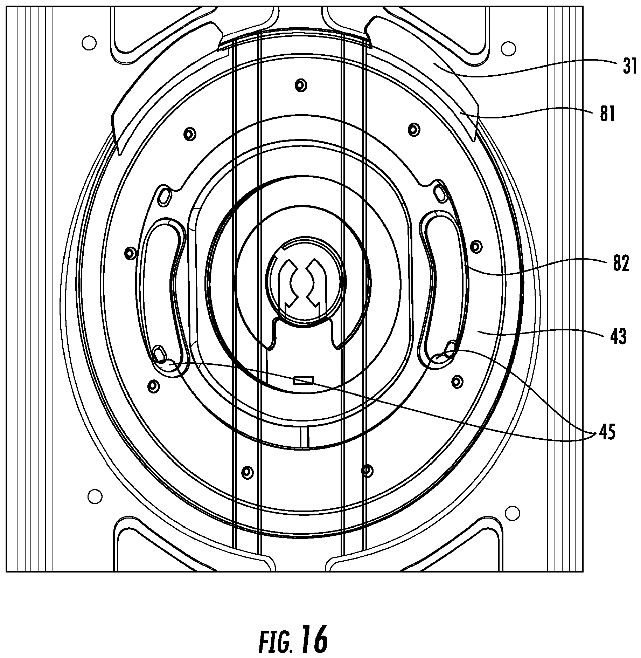

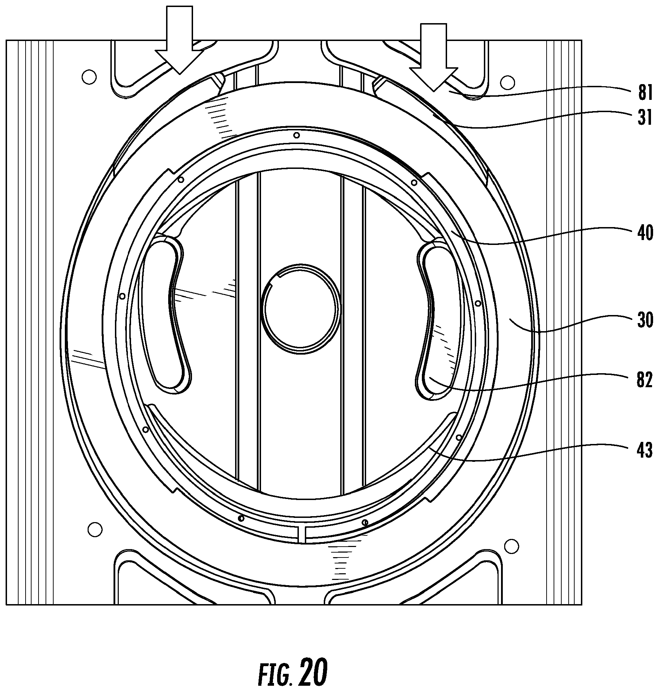

The device 50 is attached to the wall mount 10 in the vertical orientation by placing the device slightly above the wall mount. The user then lowers the device 50 onto the wall mount 10, where the mounting horns 31 will be captured by the corresponding slots 81on the back cover as the device 50 slides downward. The lower blades 45 will also partially engage with the flaps 82 in this position as seen in FIG 16. The connection between mounting horns 31 and the slots 81 will hold the device to the wall, as in FIG 20. A user can then rotate the device 50, bringing it to a horizontal orientation, by simply pushing or pulling an edge or corner of the device. That action will move the device and rotate the back cover, sliding the raised flaps of the back cover along channels between the face plate 40 and the core of the wall plate 20 over the extended portions 43 and knife edges 45 of the face plate. Thus, in the horizontal orientation, the device 50 is supported by the flaps 82, locked into the face plate 40 above and below which secures the device on the wall via the raised flaps rather than only the mounting horns. Thus, the slots 81 are engaged when the invention is mounted in the vertical orientation and flaps 82 are engaged when the invention is rotated into horizontal orientation.

It will be understood by those of ordinary skill in the art that various changes may be made and equivalents may be substituted for elements without departing from the scope of the invention. In addition, many modifications may be made to adapt a particular feature or material to the teachings of the invention without departing from the scope thereof. Therefore, it is intended that the invention not be limited to the particular embodiments disclosed, but that the invention will include all embodiments falling within the scope of the claims.

## Claims

1. A system for pivotally mounting an electronic device (50) to a wall (60) comprising:
a power connector disc (70) having a pair of contact pads (72);
a wall plate (20) configured to mount to the wall having a central opening (21) to receive the power connector disc (70);
**characterised in that** the wall plate has at least one mounting slot (22) and at least one protruding rotation limiting tab (24); and the system further comprises:
a rotator plate (30) configured to coaxially engage said wall plate (20) having at least one mounting horn (31) extending in an upward direction from the circumference and a circular central opening having at least one inwardly projecting rotation tab (33);
a face plate (40) configured to coaxially engage said rotator plate (30) and said wall plate (20), and fixed to the wall plate to enclose the rotator plate between the wall plate and the face plate, and having a circular central opening (41) defined by an inner circular edge and at least one strip (43) along the said circular inner edge extending into the interior of the central opening;
a back cover (80) configured to mount to the electronic device having a pair of power contact points positioned to make contact with said pair of contact pads (72), at least one horn slot (81) sized to receive to said mounting horn (31) and at least one flap (82) sized to receive said at least one strip (43);
wherein said strip (43) is positioned into said flap (82) in a first position and said strip is positioned out of said flap in a second position; and
wherein rotation of said rotator plate (30) with respect to said wall plate (20) and said face plate (40) is defined by the interaction of the at least one rotation limiting tab (24) with the at least one rotation tab (33).

2. A system as described in claim 1 wherein said at least one horn slot (81) receives said at least one mounting horn (31) from below when said electronic device is in the vertical position.

3. A system as described in claim 1 wherein said first position is a horizontal position and said second position is a vertical position.

4. A system as described in claim 1 wherein the thickness of the said wall plate, said rotator plate, and said face plate collectively is approximately 8 millimeters.

5. A system as described in claim 4 wherein the thickness of the said wall plate, said rotator plate, and said face plate collectively does not exceed 7.8 millimeters.

6. A system as described in claim 1 wherein said face plate further includes at least one mounting slot (44) corresponding with said at least one mounting slot (22) in said wall plate.

7. A system as described in claim 1 wherein said at least one strip (43) on said face plate has a knife edge (45).

8. A system as described in claim 1 wherein said wall plate further includes a channel for a power cable.

9. A system as described in claim 1 wherein said contact pads (72) are arcuate.

10. A system as described in claim 1 wherein said contact pads are connected to a connector which is removably attached to a power source.

11. A system as described in claim 1 wherein said contact pads provide continuous power to said power contact points during said rotation.

12. A system as described in claim 1 wherein said wall plate is configured to mount to the wall by screws.

13. A system as described in claim 1 wherein said wall plate is configured to mount to the wall by double sided adhesive tape.

14. A system as described in claim 1 wherein said electronic device is mounted no more than 2.5 mm away from said wall.

15. A method for pivotally mounting an electronic device to a wall comprising the steps of: providing a power connector disc (70) having a pair of contact pads (72);
providing a wall plate (20) configured to mount to the wall having a central opening (21) to receive the power connector disc (70);
**characterised in that** the wall plate has at least one mounting slot (22) and at least one protruding rotation limiting tab (24); and that the method further comprises:
providing a rotator plate (30) configured to coaxially engage said wall plate having at least one mounting horn (31) extending in an upward direction from the circumference and a circular central opening having at least one inwardly projecting rotation tab (33);
providing a face plate (40) configured to coaxially engage said wall plate and said rotator plate, and fixed to the wall plate to enclose the rotator plate between the wall plate and the face plate, and having a circular central opening (41) defined by an inner circular edge and at least one strip (43) along the said circular inner edge extending into the interior of the central opening;
providing a back cover (80) configured to mount to the said electronic device having a pair of power contact points in contact with said pair of contact pads, at least one horn slot (81) sized to receive said at least one mounting horn (31), and at least one flap (82) sized to receive said at least one strip (43);
mounting said wall plate, said rotator plate, and said face plate to a wall;
positioning the said back cover (80) connected to the display device above the said rotator plate and lowering said back cover connected to the display device onto the rotator plate such that the said at least one horn slot (81) lays on top of said at least one mounting horn (31);
wherein said strip (43) is positioned into said flap (82) in a first position and said strip (43) is positioned out of the said flap (82) when said device is in a second position; and
wherein rotation of said rotator plate with respect to said wall plate and said face plate is defined by the interaction of the at least one rotation limiting tab (24) with the at least one rotation tab (33).

## Patentansprüche

1. System zur schwenkbaren Befestigung einer elektronischen Vorrichtung (50) an einer Wand (60), umfassend:
eine Stromanschlussscheibe (70), die ein Paar Kontaktflächen (72) aufweist;
eine Wandplatte (20), die zum Befestigen an der Wand ausgelegt ist und eine zentrale Öffnung (21) zum Aufnehmen der Stromanschlussscheibe (70) aufweist;
**dadurch gekennzeichnet, dass** die Wandplatte mindestens einen Befestigungsschlitz (22) und mindestens eine hervorstehende Drehbegrenzungslasche (24) aufweist; und das System ferner umfasst:
eine Drehplatte (30), die dazu ausgelegt ist, koaxial mit der Wandplatte (20) in Eingriff zu kommen, mit mindestens einem Befestigungshorn (31), das sich vom Umfang in einer Aufwärtsrichtung erstreckt, und einer kreisförmigen zentralen Öffnung mit mindestens einer nach innen vorstehenden Drehlasche (33);
eine Stirnplatte (40), die dazu ausgelegt ist, koaxial mit der Drehplatte (30) und der Wandplatte (20) in Eingriff zu kommen, und die an der Wandplatte befestigt wird, um die Drehplatte zwischen der Wandplatte und der Stirnplatte einzuschließen, und die eine kreisförmige zentrale Öffnung (41) aufweist, die durch eine innere kreisförmige Kante und mindestens einen Streifen (43) entlang der kreisförmigen inneren Kante definiert ist, der sich in das Innere der zentralen Öffnung erstreckt;
eine Rückenabdeckung (80), die dazu ausgelegt ist, an der elektronischen Vorrichtung angebracht zu werden, mit einem Paar Stromkontaktpunkten, die so positioniert sind, dass sie mit dem Paar von Kontaktflächen (72) in Kontakt stehen, mindestens einem Hornschlitz (81), der dazu bemessen ist, das Befestigungshorn (31) aufzunehmen, und mindestens einer Klappe (82), die dazu bemessen ist, den mindestens einen Streifen (43) aufzunehmen;
wobei der Streifen (43) in einer ersten Position in die Klappe (82) hinein positioniert wird und der Streifen in einer zweiten Position aus der Klappe heraus positioniert wird; und
wobei die Drehung der Drehplatte (30) in Bezug auf die Wandplatte (20) und die Stirnplatte (40) durch das Zusammenwirken der mindestens einen Drehbegrenzungslasche (24) mit der mindestens einen Drehlasche (33) definiert wird.

2. System gemäß Anspruch 1, wobei der mindestens eine Hornschlitz (81) den mindestens einen Befestigungshorn (31) von unten aufnimmt, wenn sich die elektronische Vorrichtung in der vertikalen Position befindet.

3. System gemäß Beschreibung in Anspruch 1, wobei die erste Position eine horizontale Position und die zweite Position eine vertikale Position ist.

4. System gemäß Beschreibung in Anspruch 1, wobei die Dicke der Wandplatte, der Drehplatte und der Stirnplatte zusammen etwa 8 Millimeter beträgt.

5. System gemäß Beschreibung in Anspruch 4, wobei die Dicke der Wandplatte, der Drehplatte und der Stirnplatte zusammen 7,8 Millimeter nicht überschreitet.

6. System gemäß Beschreibung in Anspruch 1, wobei die Stirnplatte ferner mindestens einen Befestigungsschlitz (44) aufweist, der dem mindestens einen Befestigungsschlitz (22) in der Wandplatte entspricht.

7. System gemäß Beschreibung in Anspruch 1, wobei der mindestens eine Streifen (43) auf der Stirnplatte eine Messerkante (45) aufweist.

8. System gemäß Beschreibung in Anspruch 1, wobei die Wandplatte ferner einen Kanal für ein Stromkabel aufweist.

9. System nach Beschreibung in Anspruch 1, wobei die Kontaktflächen (72) bogenförmig sind.

10. System gemäß Beschreibung in Anspruch 1, wobei die Kontaktflächen mit einem Verbinder verbunden sind, der abnehmbar an einer Stromquelle angebracht ist.

11. System gemäß Beschreibung in Anspruch 1, wobei die Kontaktflächen die Stromkontaktpunkte während der Drehung kontinuierlich mit Strom versorgen.

12. System gemäß Beschreibung in Anspruch 1, wobei die Wandplatte dazu ausgelegt ist, an der Wand mit Schrauben befestigt zu werden.

13. System gemäß Beschreibung in Anspruch 1, wobei die Wandplatte dazu ausgelegt, an der Wand mit doppelseitigem Klebeband befestigt zu werden.

14. System gemäß Beschreibung in Anspruch 1, wobei die elektronische Vorrichtung nicht mehr als 2,5 mm von der Wand entfernt montiert wird.

15. Verfahren zur schwenkbaren Befestigung einer elektronischen Vorrichtung an einer Wand, das die folgenden Schritte umfasst:
Bereitstellen einer Stromanschlussscheibe (70), die ein Paar Kontaktflächen (72) aufweist;
Bereitstellen einer Wandplatte (20), die zum Befestigen an der Wand ausgelegt ist und eine zentrale Öffnung (21) zum Aufnehmen der Stromanschlussscheibe (70) aufweist;
**dadurch gekennzeichnet, dass** die Wandplatte mindestens einen Befestigungsschlitz (22) und mindestens eine hervorstehende Drehbegrenzungslasche (24) aufweist; und dass das Verfahren ferner umfasst:
Bereitstellen einer Drehplatte (30), die dazu ausgelegt ist, koaxial mit der Wandplatte in Eingriff zu kommen, und die mindestens einen Befestigungshorn (31), der sich in einer Aufwärtsrichtung vom Umfang aus erstreckt, und eine kreisförmige zentrale Öffnung mit mindestens einer nach innen vorstehenden Drehlasche (33) aufweist;
Bereitstellen einer Stirnplatte (40), die dazu ausgelegt ist, koaxial mit der Wandplatte und der Drehplatte in Eingriff zu kommen, und die an der Wandplatte befestigt wird, um die Drehplatte zwischen der Wandplatte und der Stirnplatte einzuschließen, und die eine kreisförmige zentrale Öffnung (41) aufweist, die durch eine innere kreisförmige Kante und mindestens einen Streifen (43) entlang der kreisförmigen inneren Kante definiert ist, der sich in das Innere der zentralen Öffnung erstreckt;
Bereitstellen einer Rückenabdeckung (80), die dazu ausgelegt ist, an der der elektronischen Vorrichtung angebracht zu werden, mit einem Paar Stromkontaktpunkten in Kontakt mit dem Paar Kontaktflächen, mindestens einem Hornschlitz (81), der dazu bemessen ist, mindestens einen Befestigungshorn (31) aufzunehmen, und mindestens einer Klappe (82), die dazu bemessen ist, den mindestens einen Streifen (43) aufzunehmen;
Befestigen der Wandplatte, der Drehplatte und der Stirnplatte an einer Wand;
Positionieren der mit der Anzeigevorrichtung verbundenen Rückenabdeckung (80) über der Drehplatte und Absenken des mit der Anzeigevorrichtung verbundenen Rückendeckels auf die Drehplatte, sodass der mindestens eine Hornschlitz (81) über dem mindestens einen Befestigungshorn (31) liegt;
wobei der Streifen (43) in einer ersten Position in die Klappe (82) hinein positioniert wird und der Streifen (43) aus der Klappe (82) heraus positioniert wird, wenn sich die Vorrichtung in einer zweiten Position befindet; und
wobei die Drehung der Drehplatte in Bezug auf die Wandplatte und die Stirnplatte durch das Zusammenwirken der mindestens einen Drehbegrenzungslasche (24) mit der mindestens einen Drehlasche (33) definiert wird.

## Revendications

1. Système permettant de monter pivotant un dispositif électronique (50) sur un mur (60) comprenant :
un disque de connecteur d'alimentation (70) ayant une paire de plages de contact (72) ;
une plaque murale (20) configurée pour être montée sur le mur, ayant une ouverture centrale (21) pour recevoir le disque de connecteur d'alimentation (70) ;
**caractérisé en ce que** la plaque murale a au moins une fente de montage (22) et au moins une patte de limitation de rotation faisant saillie (24) ; et le système comprenant en outre :
une plaque rotative (30) configurée pour mettre en prise coaxialement ladite plaque murale (20) ayant au moins une corne de montage (31) s'étendant dans une direction vers le haut depuis la circonférence et une ouverture centrale circulaire ayant au moins une patte de rotation faisant saillie vers l'intérieur (33) ;
une plaque frontale (40) configurée pour mettre en prise coaxialement ladite plaque rotative (30) et ladite plaque murale (20), et fixée à la plaque murale pour enfermer la plaque rotative entre la plaque murale et la plaque frontale, et ayant une ouverture centrale circulaire (41) définie par un bord circulaire interne et au moins une bande (43) le long dudit bord circulaire interne s'étendant à l'intérieur de l'ouverture centrale ;
un couvercle arrière (80) configuré pour être monté sur le dispositif électronique ayant une paire de points de contact d'alimentation positionnés pour établir le contact avec ladite paire de plages de contact (72), au moins une fente de corne (81) dimensionnée pour recevoir ladite corne de montage (31) et au moins un rabat (82) dimensionné pour recevoir ladite au moins une bande (43) ;
ladite bande (43) étant positionnée dans ledit rabat (82) dans une première position et ladite bande étant positionnée hors dudit rabat dans une seconde position ; et
la rotation de ladite plaque rotative (30) par rapport à ladite plaque murale (20) et à ladite plaque frontale (40) étant définie par l'interaction de l'au moins une patte de limitation de rotation (24) avec l'au moins une patte de rotation (33).

2. Système selon la revendication 1, ladite au moins une fente de corne (81) recevant ladite au moins une corne de montage (31) par le bas lorsque ledit dispositif électronique est en position verticale.

3. Système selon la revendication 1, ladite première position étant une position horizontale et ladite seconde position étant une position verticale.

4. Système selon la revendication 1, l'épaisseur de ladite plaque murale, de ladite plaque rotative et de ladite plaque frontale étant ensemble d'environ 8 millimètres.

5. Système selon la revendication 4, l'épaisseur de ladite plaque murale, de ladite plaque rotative et de ladite plaque frontale ne dépassant pas ensemble 7,8 millimètres.

6. Système selon la revendication 1, ladite plaque frontale comprenant en outre au moins une fente de montage (44) correspondant à ladite au moins une fente de montage (22) dans ladite plaque murale.

7. Système selon la revendication 1, ladite au moins une bande (43) sur ladite plaque frontale ayant une arête vive (45) .

8. Système selon la revendication 1, ladite plaque murale comprenant en outre un canal pour un câble d'alimentation.

9. Système selon la revendication 1, lesdites plages de contact (72) étant arquées.

10. Système selon la revendication 1, lesdites plages de contact étant connectées à un connecteur qui est fixé de manière amovible à une source d'alimentation.

11. Système selon la revendication 1, lesdites plages de contact fournissant une alimentation continue auxdits points de contact d'alimentation pendant ladite rotation.

12. Système selon la revendication 1, ladite plaque murale étant configurée pour être montée sur le mur par des vis.

13. Système selon la revendication 1, ladite plaque murale étant configurée pour être montée sur le mur à l'aide d'un ruban adhésif double face.

14. Système selon la revendication 1, ledit dispositif électronique étant monté à pas plus de 2,5 mm dudit mur.

15. Procédé permettant de monter pivotant un dispositif électronique sur un mur, comprenant les étapes de :
fourniture d'un disque de connecteur d'alimentation (70) ayant une paire de plages de contact (72) ;
fourniture d'une plaque murale (20) configurée pour être montée sur le mur, ayant une ouverture centrale (21) pour recevoir le disque de connecteur d'alimentation (70) ;
**caractérisé en ce que** la plaque murale a au moins une fente de montage (22) et au moins une patte de limitation de rotation faisant saillie (24) ; et **en ce que** le procédé comprend en outre :
la fourniture d'une plaque rotative (30) configurée pour mettre en prise coaxialement ladite plaque murale ayant au moins une corne de montage (31) s'étendant dans une direction vers le haut depuis la circonférence et une ouverture centrale circulaire ayant au moins une patte de rotation (33) faisant saillie vers l'intérieur ;
la fourniture d'une plaque frontale (40) configurée pour mettre en prise coaxialement ladite plaque murale et ladite plaque rotative, et fixée à la plaque murale pour enfermer la plaque rotative entre la plaque murale et la plaque frontale, et ayant une ouverture centrale circulaire (41) définie par un bord circulaire interne et au moins une bande (43) le long dudit bord circulaire interne s'étendant à l'intérieur de l'ouverture centrale ;
la fourniture d'un couvercle arrière (80) configuré pour être monté sur ledit dispositif électronique ayant une paire de points de contact d'alimentation en contact avec ladite paire de plages de contact, au moins une fente de corne (81) dimensionnée pour recevoir ledit au moins une corne de montage (31), et au moins un rabat (82) dimensionné pour recevoir ladite au moins une bande (43) ;
le montage de ladite plaque murale, de ladite plaque rotative et de ladite plaque frontale sur un mur ;
le positionnement dudit couvercle arrière (80) connecté au dispositif d'affichage au-dessus de ladite plaque rotative et l'abaissement dudit couvercle arrière connecté au dispositif d'affichage sur la plaque rotative de telle sorte que ladite au moins une fente de corne (81) se trouve au-dessus de ladite au moins une corne de montage (31) ;
ladite bande (43) étant positionnée dans ledit rabat (82) dans une première position et ladite bande (43) étant positionnée hors dudit rabat (82) lorsque ledit dispositif est dans une seconde position ; et
la rotation de ladite plaque rotative par rapport à ladite plaque murale et à ladite plaque frontale étant définie par l'interaction de l'au moins une patte de limitation de rotation (24) avec l'au moins une patte de rotation (33).
